# EUROPÄISCHE PATENTSCHRIFT

(11) **EP 3 063 102 B1**
(45) Veröffentlichungstag und Bekanntmachung des Hinweises auf die Patenterteilung: **27.03.2019**
(21) Anmeldenummer: 14734513.6
(22) Anmeldetag: 03.07.2014
(51) Int. Cl.: C04B 28/04, C04B 28/14, C04B 111/00, C04B 111/27, C04B 111/60, C04B 111/62

(54) **WASSERBESTÄNDIGES BINDEMITTEL AUF BASIS VON BETA-CALCIUMSULFAT-HEMIHYDRAT**
WATER-RESISTANT BINDER BASED ON BETA-CALCIUM SULPHATE HEMIHYDRATE
LIANT RÉSISTANT À L'EAU À BASE DE HÉMIHYDRATE DE SULFATE DE CALCIUM BÊTA

(30) Priorität: 31.10.2013 DE 102013018288
(43) Veröffentlichungstag der Anmeldung: 07.09.2016
(73) Patentinhaber: Henkel AG & Co. KGaA, 40589 Düsseldorf (DE)
(72) Erfinder: AUER, Stephan, 58730 Fröndenberg (DE); HAGEN, Wolfgang, 40668 Meerbusch (DE)
(86) Internationale Anmeldenummer: PCT/EP2014/064241
(87) Internationale Veröffentlichungsnummer: WO 2015/062749

(56) Entgegenhaltungen:
- WO-A1-2013/004621
- WO-A1-2014/108436
- DATABASE WPI Week 201161 Thomson Scientific, London, GB; AN 2011-K80638 XP002729954, & RU 2 426 702 C1 (KAZAN AGRIC ACAD) 20. August 2011 (2011-08-20)
- DATABASE WPI Week 200732 Thomson Scientific, London, GB; AN 2007-331238 XP002729955, & CN 1 861 543 A (LIU F) 15. November 2006 (2006-11-15)

## Beschreibung

Die Erfindung betrifft wasserbeständige Bindemittel und bauchemische Erzeugnisse. Die Erfindung betrifft insbesondere solche Bindemittel, die beta-Calciumsulfat-Hemihydrat, Portlandzement sowie Zeolith enthalten.

Aus dem Stand der Technik sind Calciumsulfat-haltige Bindemittelzusammensetzungen bekannt. So beschreibt die europäische Patentanmeldung EP 0 849 237 A1 Zusammensetzungen auf Basis von Calciumsulfat-Hemihydrat, Portlandzement und Metakaolin.

DATABASE WPI Week 201161 Thomson Scientific, London, GB; AN 2011-K80638 & RU 2 426 702 C1 (KAZAN AGRIC ACAD) 20. August 2011 (2011-08-20) zeigt eine Bindemittelzusammenstzung die 34-37 Gew.-% Portlandzement, 50-55 Gew.-% beta-Calciumsulfat-Hemihydrat, 0-13 Gew.-% Zeolith und/oder 0-13 Gew.-% Microsilica und Plastifizierer enthält.

Bei den in EP 0 849 237 A1 beschriebenen Zusammensetzungen ist allerdings nachteilig, dass das eingesetzte Metakaolin bei sehr hohen Temperaturen, nämlich bis zu 900°C kalziniert werden muss. Ein solch energieintensiver Prozess ist aus ökologischen Gründen, insbesondere mit Blick auf den so genannten CO₂-Fußabdruck, nicht erstrebenswert, aber für die in EP 0 849 237 A1 genannte Technologie unumgänglich. Vor diesem Hintergrund bestand die an die vorliegende Erfindung gestellte Aufgabe darin, andere wasserbeständige Bindemittel zur Verfügung zu stellen.

Diese Aufgabe wird vom Gegenstand der Erfindung gelöst. Dabei handelt es sich um eine Bindemittelzusammensetzung, insbesondere pulverförmige Zusammensetzung, umfassend
(a) beta-Calciumsulfat-Hemihydrat (β-CaSO₄·0.5 H₂O),
(b) Portlandzement,
(c) Zeolith, wobei das beta-Calciumsulfat-Hemihydrat in einer Menge von ≥ 65 Gew.-Teilen und der Zeolith in einer Gesamtmenge von 1 bis 25 Gew.-Teilen enthalten ist, jeweils bezogen auf eine Gesamtmenge von 100 Gew.-Teilen, die gebildet ist von den drei Komponenten (a) beta-Calciumsulfat-Hemihydrat (β-CaSO4·0.5 H2O), (b) Portlandzement, (c) Zeolith.

Diese Bindemittelzusammensetzung zeichnet sich vorteilhafterweise dadurch aus, dass sie nach Zugabe des notwendigen Anmachwassers unter Wasseraufnahme an Luft erhärtet und nach dem Aushärten wasserbeständig ist und zu einem überaus wasserfesten Baustoff führt. Anmachwasser (auch Zugabewasser genannt) bezeichnet das Wasser, welches bei der Mischung und Aufbereitung der Bindemittelzusammensetzung eingebracht werden muss, um diese verarbeitbar zu machen und den Abbindeprozess in Gang zu bringen. Die gesamte Wassermenge in der Mischung setzt sich zusammen aus der Menge, die mit dem optionalen Zuschlagmaterial (vorzugsweise Sand, Kies) in die Mischung gelangt und dem Zugabewasser. Zugabewasser wird jeweils nur in einer solchen Menge zugegeben, dass die zur Verarbeitung erforderliche Konsistenz erreicht wird. Die Menge des Zugabewassers kann der Fachmann ohne weiteres jeweils durch wenige Handversuche ermitteln. Bei werkseitig gefertigten bauchemischen Werktrockenmörteln wird die Menge des Anmachwassers durch den Hersteller auf den jeweiligen technischen Begleitdokumenten angegeben.

Die Wasserbeständigkeit manifestiert sich darin, dass die physikalischen Festigkeitseigenschaften des ausgehärteten Binders bei Wasserkontakt erhalten bleiben. Auch die langfristigen Nutzungseigenschaften werden bei Wasserkontakt nicht beeinträchtigt. Die erfindungsgemäße Bindemittelzusammensetzung ist somit auch ohne weiteres im Außenbereich einsetzbar und hält Witterungseinflüssen stand. Auch die genormten Mindestanforderungen für bauchemische Produkte, welche die erfindungsgemäßen Zusammensetzungen enthalten, werden erfüllt. Beispielsweise werden bei den aus erfindungsgemäßen Bindemittelzusammensetzungen resultierenden Fliesenklebern die genormten Anforderungen nach DIN EN 12004:2007 an die Haftzugfestigkeitswerte nach Trockenlagerung (gemessen nach Prüfverfahren EN 1348:2007, 8.2), nach Wasserlagerung (gemessen nach Prüfverfahren EN 1348:2007, 8.3), nach Warmlagerung (gemessen nach Prüfverfahren EN 1348:2007, 8.4) und nach Frost-Tauwechsel-Lagerung (gemessen nach Prüfverfahren EN 1348:2007, 8.5) erfüllt. Im Gegensatz dazu weisen Fliesenkleber, die als Bindemittel ausschließlich Gips oder ein Gips/Zement-Gemisch mit einem Gipsanteil von 50 Gew.-% oder mehr enthalten, nach Wasserlagerung und nach Frost-Tauwechsellagerung unzureichende Haftzugfestigkeiten auf. Wird ausschließlich Gips eingesetzt, liegen die entsprechenden Haftzugfestigkeiten bei nahezu 0 N/mm².

Außerdem bleiben die positiven Anwendungseigenschaften des Calciumsulfates, wie insbesondere gute Frühfestigkeit, einfache Verarbeitbarkeit, geringes Schwinden erhalten.

Im Gegensatz zum Metakaolin ist der Einsatz von Zeolith auch in ökologischer Hinsicht vorteilhaft, da Zeolith als natürliches Mineral verfügbar und einsetzbar ist. Es muss nicht erst wie das Metakaolin bei sehr hohen Temperaturen kalziniert werden, um in der erfindungsgemäßen Bindemittelzusammensetzung erfolgreich eingesetzt werden zu können. Es konnte in überraschender Weise gefunden werden, dass gerade die Kombination von beta-Calciumsulfat-Hemihydrat mit Portlandzement und Zeolith, (vorzugsweise natürlicher Zeolith, vorteilhafterweise ausgewählt aus Blätterzeolithen, bevorzugt Zeolithen der Heulandit-Gruppe, insbesondere Klinoptilolith) zu besonders guten Resultaten führt, was Anwendungs- und Materialeigenschaften betrifft.

Ein Vorteil der Erfindung liegt darin, dass die erfindungsgemäße Zusammensetzung unter Wasseraufnahme sehr schnell härtet und eine hohe Frühfestigkeit zeigt. Auf Basis dieser Zusammensetzungen lassen sich beispielsweise Fliesenkleber erhalten, die bereits nach einer Trockenzeit von 3 Stunden begehbar sind und eine Haftzugfestigkeit (gemessen nach Prüfverfahren EN 1348:2007, 8.2) von mehr als 0,3 N/mm² aufweisen. Die Wasserbeständigkeit des resultierenden Baustoffs ebenso wie dessen Oberflächenbeschaffenheit sowie Widerstandsfähigkeit gegenüber extremen natürlichen Witterungs- und Temperatureinflüssen sind hervorragend. Die resultierenden Baustoffe zeigen eine hervorragende Langzeitstabilität.

Ein weiterer Vorteil liegt darin, dass die erfindungsgemäße Zusammensetzung unter Wasseraufnahme auch bei niedrigen Temperaturen sehr schnell härtet. Die Härtungsdauer bei 5°C ist überraschenderweise im Vergleich zur Härtungsdauer bei 23°C maximal doppelt so lang.

Noch ein weiterer Vorteil liegt darin, dass der resultierende wasserfeste Baustoff allenfalls ein überaus geringes Schwinden zeigt, welches ungefähr 5- bis 10-mal niedriger als das von Baustoffen auf Basis von reinem Portlandzement ist.

Wiederum ein weiterer Vorteil liegt darin, dass die erfindungsgemäße Zusammensetzung vom Farbeindruck deutlich heller als gewöhnlicher grauer Portlandzement ist. Sollte ein dunklerer Farbeindruck angestrebt werden, lässt sich das z.B. einfach durch Zumischung von Ruß erreichen.

Ein anderer Vorteil liegt darin, dass die erfindungsgemäßen Zusammensetzungen und diese enthaltende bauchemischen Produkte eine hervorragende Verarbeitbarkeit nach Anmischen mit dem Anmachwasser zeigen. Insbesondere haben Produkte, die auf der erfindungsgemäßen Bindemittelzusammensetzung basieren, ein deutlich reduziertes Stauben verglichen mit den üblichen Produkten.

Unter bauchemischen Produkten werden erfindungsgemäß Zusammensetzungen verstanden, die neben einer Bindemittelzusammensetzung mindestens 10 Gew.-Teile, vorzugsweise mindestens 35 Gew.-Teile, besonders bevorzugt mindestens 45 Gew.-Teile, jeweils bezogen auf das Gesamtgewicht des bauchemischen Produkts, mindestens eines Zuschlagstoffs enthalten. Geeignete Zuschlagsstoffe werden unten genannt.

Die erfindungsgemäßen Zusammensetzungen lassen sich hervorragend als Bindemittel in bauchemischen Produkten wie z.B. Fliesenkleber, Fugenmörtel, Ankermörtel, Putz- und Mauermörtel, Klebe- und Armierungsmörtel für Wärmedämmverbundsysteme (external thermal insulation composite systems : "ETICS"), Estriche und selbstverlaufenden Fußbodenausgleichsmassen einsetzen, sowie nach Zugabe entsprechender Zuschlagstoffe, wie insbesondere Quarzsand, beim Mörteln, Verankern, Pflastern, Verputzen oder Beschichten von Innen- oder Außenflächen, z.B. von Gebäudewänden oder Decken und Reparieren von Flächen, z.B. Auffüllen von Rissen in Wänden oder Böden, sowie beim Gießen in Formen einsetzen.

Ein weiterer Vorteil ist, dass auf den Einsatz von Hydrophobiermitteln, wie beispielsweise Stearate von Calcium oder Zink, die Hydrophobie verleihen, verzichtet werden kann. Vorzugsweise sind erfindungsgemäße bauchemische Produkte frei von Hydrophobiermitteln.

Die erfindungsgemäße Bindemittelzusammensetzung umfasst als zwingende Bestandteile beta-Calciumsulfat-Hemihydrat, Portlandzement und Zeolith (insbesondere natürlicher Zeolith); sie liegt insbesondere in trockener, pulverförmiger Form vor.

Beta-Calciumsulfat-Hemihydrat (β-CaSO₄·0.5 H₂O) ist dem Fachmann an sich bekannt und kommerziell erhältlich.

Das beta-Calciumsulfat-Hemihydrat wird vorzugsweise in pulverförmiger Form eingesetzt. Die mittlere Teilchengröße d50 liegt vorzugsweise unter 50 µm, vorteilhafterweise unter 30 µm und insbesondere über 1 µm und unter 20 µm, z.B. im Bereich von 2 µm bis 15 µm.

Dabei bedeutet "mittlere Teilchengröße d50 = a µm", dass von dem betrachteten Gut 50 Masse-% der Partikel einen Durchmesser größer als a µm und 50 Masse-% einen kleineren Durchmesser als a µm haben. Die mittlere Teilchengröße wird erfindungsgemäß mit dem nach dem Prinzip der Analyse der Beugung von inkohärentem Licht am Partikelstrom arbeitenden, von der Firma Retsch Technology vertriebenen Messgerät Crystalsizer bestimmt.

Das beta-Calciumsulfat-Hemihydrat ist aus ökologischer Sicht sehr vorteilhaft, weil zu dessen Herstellung ein vergleichsweise niedriger Energieeintrag erforderlich ist. Dieser liegt deutlich unter dem Energieeintrag, der für die Herstellung von alpha-Calciumsulfat-Hemihydrat aufzubringen ist. Dennoch hat sich der Einsatz von beta-Calciumsulfat-Hemihydrat bei der Herstellung von Bindemittelzusammensetzungen und diese enthaltenden bauchemischen Produkte bislang nicht durchgesetzt. Dies mag daran liegen, dass beta-Calciumsulfat-Hemihydrat einen vergleichsweise hohen Wasserbedarf hat, d.h. dass entsprechenden Zusammensetzungen auf Basis von beta-Calciumsulfat-Hemihydrat bei der Herstellung der anwendungsfertigen Gemische mehr Wasser zugegeben werden muss, als vergleichbaren Zusammensetzungen auf Basis von alpha-Calciumsulfat-Hemihydrat. Dies führt zu verlängerten Abbinde- und Trocknungszeiten. Es hat sich jedoch gezeigt, dass diese Nachteile von beta-Calciumsulfat-Hemihydrat vermieden werden können. Geeignete Maßnahmen sind insbesondere die Zugabe mindestens eines Verflüssigers zur Bindemittelzusammensetzung und/ oder zum bauchemischen Produkt und/oder ein hoher Anteil an Füllstoffen, vorzugsweise 60 bis 85 Gew.-% eines oder mehrerer Füllstoffe, besonders bevorzugt 65 bis 85 Gew.-%, zum bauchemische Produkt, wobei die Mengenangaben auf das Gesamtgewicht des bauchemischen Produkts bezogen sind. Der Begriff "Portlandzement" steht im Sinne dieser Erfindung ganz allgemein für einen Zement, der unter Wasseraufnahme erhärtet. Ein solcher Zement kann insbesondere auf herkömmliche Weise durch Erhitzen eines Schlammes aus Ton und Calciumcarbonat hergestellt werden. Die Norm DIN EN 197-1:2011 unterscheidet die nachstehenden Zementtypen CEM I bis CEM V, nämlich
CEM I Portlandzemente,
CEM II Portlandkompositzemente,
CEM III Hochofenzemente,
CEM IV Puzzolanzemente,
CEM V Kompositzemente.

Insbesondere diese 5 Zementtypen CEM I bis CEM V der Norm DIN EN 197-1:2011 sind erfindungsgemäß von dem Begriff "Portlandzement" umfasst. Die einsetzbaren Zementtypen umfassen jeweils Portlandzementklinker. Weitere optionale Bestandteile sind insbesondere Hüttensand, Silicastaub, Puzzolane, Flugasche, gebrannter Schiefer, Kalkstein sowie andere Nebenbestandteile. Die Bestandteile der Zementtypen ergeben sich aus der Norm DIN EN 197-1: 2011. Beispielsweise weist der Zementtyp CEM I 95-100 Masse-% Portlandzementklinker auf. Besonders bevorzugte Zementtypen im Sinne der Erfindung sind die Typen CEM I bis CEM V mit einem Portlandzementklinkeranteil ≥ 40 Masse-%. Insbesondere bevorzugt sind die Typen CEM I und CEM II.

Die Mahlfeinheit des einsetzbaren Portlandzements, ausgedrückt als Blaine-Wert, beträgt vorzugsweise > 2500 cm²/g. Der Blaine-Wert ist ein standardisiertes Maß für den Grad der Feinvermahlung von Zement, vorzugsweise bestimmbar nach EN 196-6. Er wird angegeben als labortechnisch mit dem Blaine-Gerät ermittelte spezifische Oberfläche (cm²/g). Die Bestimmung des Blaine-Wertes ist dem Fachmann bekannt und in der Literatur ausführlich beschrieben, z.B. "Die Prüfung der Mahlfeinheit mit dem Gerät von Blaine", Band 7 von Schriftenreihe der Zementindustrie, Autor: Fritz Gille, Bauverlag 1951.

Der Portlandzement wird insbesondere in pulverförmiger Form eingesetzt. Die mittlere Teilchengröße d50 liegt vorzugsweise unter 50 µm, vorteilhafterweise unter 30 µm und insbesondere zwischen 0,5 µm und ≤ 25 µm. Dabei bedeutet "mittlere Teilchengröße d50 = a µm", dass von dem betrachteten Gut 50 Masse-% der Partikel einen Durchmesser größer als a µm und 50 Masse-% einen kleineren Durchmesser als a µm haben. Die mittlere Teilchengröße wird nach der oben genannten Methode bestimmt.

Der Einsatz von Portlandzement der zuvor beschriebenen Art, insbesondere mit Blick auf Teilchengröße d50 und Blaine-Wert führt wiederum zu besonders guten Anwendungs- und Materialeigenschaften, vor allem mit Blick auf die Wasserbeständigkeit und Frühfestigkeit, Verarbeitbarkeit und möglichst geringes Schwinden.

Auch Zeolithe sind dem Fachmann an sich bekannt. Es handelt sich dabei um kristalline Alumosilicate. Derzeit sind über 150 natürliche und synthetische Zeolithe bekannt. Erfindungsgemäß können sowohl natürliche als auch synthetische Zeolithe eingesetzt werden. Dabei sind natürliche Zeolithe bevorzugt. Diese lassen sich nach ihren Kristallgittern einteilen in Faserzeolithe (insbesondere umfassend Natrolith, Laumontit, Mordenit, Thomsonit), Blätterzeolithe (insbesondere umfassend Heulandit, Stilbit, Phillipsit, Harmotom, Yugawaralith) und Würfelzeolithe (insbesondere umfassend Faujasit, Gmelinit, Chabasit, Offretit, Levyn). Besonders bevorzugt im Sinne der Erfindung sind Blätterzeolithe der Heulandit-Gruppe, insbesondere Klinoptilolith.

Der Zeolith wird insbesondere in pulverförmiger Form eingesetzt. Die mittlere Teilchengröße d50 des Zeoliths liegt vorzugsweise unter 100 µm, vorteilhafterweise unter 50 µm und insbesondere über 0,5 µm und unter 15 µm. Dabei bedeutet "mittlere Teilchengröße d50 = a µm", dass von dem betrachteten Gut 50 Masse-% der Partikel einen Durchmesser größer als a µm und 50 Masse-% einen kleineren Durchmesser als a µm haben. Die mittlere Teilchengröße wird nach der o.g. Methode bestimmt.

Gemäß einer besonders bevorzugten Ausführungsform ist als Zeolith also natürlicher Zeolith enthalten, vorzugsweise ausgewählt aus Blätterzeolithen, vorteilhafterweise Zeolithen der Heulandit-Gruppe, insbesondere Klinoptilolith, wobei die mittlere Teilchengröße d50 des Zeoliths vorzugsweise unter 100 µm, vorteilhafterweise unter 50 µm und insbesondere über 0,5 µm und unter 15 µm liegt. Auch diese Ausführungsform führt zu besonders guten Anwendungs- und Materialeigenschaften, insbesondere mit Blick auf die Wasserbeständigkeit, Frühfestigkeit, Verarbeitbarkeit und geringstmögliches Schwinden.

Das beta-Calciumsulfat-Hemihydrat ist in der erfindungsgemäßen Bindemittelzusammensetzung in einer Menge von ≥ 65 Gew.- Teilen enthalten, vorzugsweise in einer Menge von 65 bis 90 Gew.- Teilen, insbesondere in einer Menge von 70 bis 80 Gew.- Teilen, bezogen auf eine Gesamtmenge von 100 Gew.- Teilen, gebildet von den drei Komponenten (a) beta-Calciumsulfat-Hemihydrat (β-CaSO₄·0.5 H₂O),(b) Portlandzement, (c) Zeolith in einer Gesamtmenge von 1 bis 25 Gew.-Teilen (vorzugsweise natürlicher Zeolith, vorteilhafterweise ausgewählt aus Blätterzeolithen, bevorzugt Zeolithen der Heulandit-Gruppe, insbesondere Klinoptilolith).

Einer weiteren bevorzugten Ausführungsform der Erfindung entspricht es, wenn der Portlandzement in der erfindungsgemäßen Bindemittelzusammensetzung in einer Gesamtmenge von 1 bis 30 Gew.- Teilen, vorzugsweise 5 bis 20 Gew.- Teilen, insbesondere 8 bis 20 Gew.- Teilen, besonders bevorzugt 10 bis 15 Gew.- Teilen enthalten ist, bezogen auf eine Gesamtmenge von 100 Gew.- Teilen, gebildet von den drei Komponenten (a) beta-Calciumsulfat-Hemihydrat (β-CaSO₄·0.5 H₂O),(b) Portlandzement, (c) Zeolith (vorzugsweise natürlicher Zeolith, vorteilhafterweise ausgewählt aus Blätterzeolithen, bevorzugt Zeolithen der Heulandit-Gruppe, insbesondere Klinoptilolith).

Der Zeolith (vorzugsweise als natürlicher Zeolith, vorteilhafterweise ausgewählt aus Blätterzeolithen, bevorzugt Zeolithen der Heulandit-Gruppe, insbesondere Klinoptilolith) ist in der erfindungsgemäßen Bindemittelzusammensetzung in einer Gesamtmenge von 1 bis 25 Gew.- Teilen enthalten, vorzugsweise 3 bis 20 Gew.- Teilen, insbesondere 5 bis 15 Gew.- Teilen, bezogen auf eine Gesamtmenge von 100 Gew.- Teilen, gebildet von den drei Komponenten (a) beta-Calciumsulfat-Hemihydrat (β - CaSO₄·0.5 H₂O),(b) Portlandzement, (c) Zeolith, wobei das beta-Calciumsulfat-Hemihydrat in einer Menge von ≥ 65 Gew.-Teilen enthalten ist.

Dementsprechend entspricht eine Bindemittelzusammensetzung,
umfassend
(a) beta-Calciumsulfat-Hemihydrat (β-CaSO₄·0.5 H₂O) in einer Menge von ≥ 65 Gew.- Teilen,
(b) Portlandzement in einer Menge von 1 bis 30 Gew.- Teilen,
(c) Zeolith, vorzugsweise natürlicher Zeolith, vorteilhafterweise ausgewählt aus Blätterzeolithen, bevorzugt Zeolithen der Heulandit-Gruppe, insbesondere Klinoptilolith, in einer Menge von 1 bis 25 Gew.- Teilen,
jeweils bezogen auf eine Gesamtmenge von 100 Gew.- Teilen, gebildet von den drei Komponenten (a) beta-Calciumsulfat-Hemihydrat (β-CaSO₄·0.5 H₂O),(b) Portlandzement, (c) Zeolith
einer bevorzugten Ausführungsform der Erfindung. Eine solche Ausführungsform ermöglicht besonders gute Anwendungs- und Materialeigenschaften, insbesondere mit Blick auf die Wasserbeständigkeit, Frühfestigkeit, Verarbeitbarkeit und möglichst geringes Schwinden.

Die erfindungsgemäße Bindemittelzusammensetzung kann ausschließlich aus den 3 Komponenten (a) beta-Calciumsulfat-Hemihydrat (β-CaSO₄·0.5 H₂O),(b) Portlandzement, (c) Zeolith (vorzugsweise natürlicher Zeolith, vorteilhafterweise ausgewählt aus Blätterzeolithen, bevorzugt Zeolithen der Heulandit-Gruppe, insbesondere Klinoptilolith) bestehen. Sie kann aber auch noch Additive umfassen.

Bevorzugt enthält die Bindemittelzusammensetzung als Additiv mindestens einen Verflüssiger. Als Verflüssiger können beispielsweise Polymerisate auf Carboxylatbasis, insbesondere modifizierte Polycarboxylatether, Polyacrylsäuren und ihre Salze, Lignosulphonatsalze und sulfonierte Melamin- oder Naphtalinformaldehyde zum Einsatz kommen. Geeignete Verflüssiger sind kommerziell erhältlich. Als bevorzugte Verflüssiger seien die von der Firma BASF erhältlichen Polycarboxylatether der Melflux-Produktserie, insbesondere Melflux 2651 F und Melflux 5581 F genannt.

Ein weiteres bevorzugt einsetzbares Additiv ist Metakaolin. Metakaolin ist ein Produkt, das beim Brennen von Kaolin und Kaolinitton entsteht. Dabei ist die Puzzolanaktivität vorzugsweise derart, dass die Reaktivität des Metakaolins mit Calciumhydroxid ≥ 500 mg, vorzugsweise ≥ 700 mg und insbesondere ≥ 1000 mg Calciumhydroxid pro g beträgt. Das Metakaolin kann vorzugsweise durch Brennen eines Kaolinittons bei einer Temperatur von 450 bis 900°C hergestellt werden. Die Reaktivität eines Metakaolins mit Calciumhydroxid kann insbesondere durch ein Verfahren bestimmt werden, das auf dem Gebiet der Betontechnik und in der Literatur als "Chapelle-Test" bezeichnet wird. Diesbezüglich und zur Auswahl besonders geeigneter Metakaoline wird auf die bereits genannte EP 0 849 237 A1 und auch auf die darin genannten Literaturstellen zur Puzzolan-Reaktivität eines Metakaolins verwiesen.

Es entspricht wiederum einer bevorzugten Ausführungsform, wenn in der erfindungsgemäßen Zusammensetzung Metakaolin enthalten ist, vorzugsweise in einer Menge von 1 bis 25 Gew.-Teilen, vorzugsweise 3 bis 20 Gew.- Teilen, insbesondere 5 bis 15 Gew.- Teilen, bezogen auf eine Gesamtmenge von 100 Gew.-Teilen, gebildet von den vier Komponenten (a) beta-Calciumsulfat-Hemihydrat (ß-CaSO₄.0.5 H₂O),(b) Portlandzement, (c) Zeolith (vorzugsweise natürlicher Zeolith, vorteilhafterweise ausgewählt aus Blätterzeolithen, bevorzugt Zeolithen der Heulandit-Gruppe, insbesondere Klinoptilolith), (d) Metakaolin.

Das Metakaolin wird insbesondere in pulverförmiger Form eingesetzt. Die mittlere Teilchengröße d50 liegt vorzugsweise unter 20 µm, vorteilhafterweise unter 10 µm und insbesondere über 0,5 µm und unter 5 µm. Dabei bedeutet "mittlere Teilchengröße d50 = a µm", dass von dem betrachteten Gut 50 Masse-% der Partikel einen Durchmesser größer als a µm und 50 Masse-% einen kleineren Durchmesser als a µm haben. Die mittlere Teilchengröße wird nach der o.g. Methode bestimmt.

Die vorliegende Erfindung ermöglicht somit auch den Einsatz von Mischungen aus Metakaolin und Zeolith (vorzugsweise natürlicher Zeolith, vorteilhafterweise ausgewählt aus Blätterzeolithen, bevorzugt Zeolithen der Heulandit-Gruppe, insbesondere Klinoptilolith), z.B. im Massenverhältnis Metakaolin zu Zeolith von 10:1 bis 1:10 oder beispielsweise 5:1 bis 1:5 oder beispielsweise 2:1 bis 1:2. Sofern Mischungen aus Metakaolin und Zeolith zum Einsatz gelangen, ist es aber bevorzugt, dass das Massenverhältnis von Metakaolin zu Zeolith kleiner als 1 ist.

Eine bevorzugte erfindungsgemäße Zusammensetzung umfasst somit wenigstens 4 Komponenten, nämlich a) beta-Calciumsulfat-Hemihydrat (β-CaSO₄·0.5 H₂O),(b) Portlandzement, (c) Zeolith (vorzugsweise natürlicher Zeolith, vorteilhafterweise ausgewählt aus Blätterzeolithen, bevorzugt Zeolithen der Heulandit-Gruppe, insbesondere Klinoptilolith), und (d) Metakaolin. Auch diese Ausführungsform kann noch weitere Additive umfassen, insbesondere die bereits genannten Verflüssiger. Es ist jedoch auch möglich, dass sie ausschließlich aus den genannten 4 Komponenten (a) bis (d) besteht.

Dementsprechend entspricht eine Bindemittelzusammensetzung,
umfassend
(a) beta-Calciumsulfat-Hemihydrat (β-CaSO₄·0.5 H₂O) in einer Menge von ≥ 65 Gew.- Teilen,
(b) Portlandzement in einer Menge von 1 bis 30 Gew.- Teilen,
(c) Zeolith (vorzugsweise natürlicher Zeolith, vorteilhafterweise ausgewählt aus Blätterzeolithen, bevorzugt Zeolithen der Heulandit-Gruppe, insbesondere Klinoptilolith) in einer Menge von 1 bis 25 Gew.- Teilen,
(d) Metakaolin in einer Menge von 1 bis 25 Gew.- Teilen,
jeweils bezogen auf eine Gesamtmenge von 100 Gew.- Teilen, gebildet von den vier Komponenten (a) beta-Calciumsulfat-Hemihydrat (β-CaSO₄·0.5 H₂O),(b) Portlandzement, (c) Zeolith, und (d) Metakaolin,
einer bevorzugten Ausführungsform der Erfindung.

Dabei sind die vorhergenannten bevorzugten Anteile der Komponenten (a), (b) und (c) ebenfalls bevorzugt für Bindemittelzusammensetzungen, die die vier Komponenten (a), (b), (c) und (d) umfassen, und somit ebenfalls als bevorzugte spezifische Bereiche bezogen auf eine Gesamtmenge von 100 Gew.- Teilen, gebildet von den vier Komponenten (a) beta-Calciumsulfat-Hemihydrat (β-CaSO₄·0.5 H₂O),(b) Portlandzement, (c) Zeolith, und (d) Metakaolin zu verstehen.

Dabei kann es im Rahmen einer weiteren Ausführungsform vorteilhaft sein, dass der Gehalt an Metakaolin 0,1 bis 15 Gew.- Teile beträgt, insbesondere 2 bis 10 Gew.-Teile , vorzugsweise ≤ 10 Gew.- Teile oder ≤ 5 Gew.- Teile oder ≤ 1 Gew.- Teile, bezogen auf eine Gesamtmenge von 100 Gew.- Teilen, gebildet von den vier Komponenten (a) beta-Calciumsulfat-Hemihydrat (β-CaSO₄·0.5 H₂O), (b) Portlandzement, (c) Zeolith, (d) Metakaolin.

Da die erfindungsgemäße Bindemittelzusammensetzung nach Zugabe von Wasser ("Anmachen", hierbei bilden sich zunächst plastische Gemische) an Luft steinartig erhärtet und nach dem Aushärten wasserbeständig ist, kann es als Bindemittel in beliebigen bauchemischen Produkten, enthaltend übliche Zuschlagsstoffe, wie insbesondere Quarzsand und/oder Kalksteinsand, eingesetzt werden, insbesondere zu dem Zweck, 2 Gegenstände miteinander zu verbinden. Somit kann eine wasserfeste Bindung zwischen den Gegenständen erhalten werden. Die Gegenstände können beliebige bekannte Gegenstände sein, so z.B. Ziegelsteine, Blocksteine, Mosaike, Platten, Dämmstoffplatten, Natursteine, Fliesen, Kacheln und dergleichen. Auch Verankerungen von Rohren und Metallelementen sind möglich.

Die erfindungsgemäße Bindemittelzusammensetzung kann grundsätzlich in allen üblichen bauchemischen Werktrockenmörtelprodukten eingesetzt werden, wie z.B. Fliesenkleberzusammensetzungen, Fugenmörtelzusammensetzungen, Reparaturmörtelzusammensetzungen.

Die erfindungsgemäße Bindemittelzusammensetzung kann auch zu dem Zweck eingesetzt werden, auf einem Gegenstand eine wasserbeständige Außenoberfläche zu schaffen. Dazu wird zunächst ein Gemisch aus der erfindungsgemäßen Zusammensetzung und Wasser bereitgestellt. Das zunächst plastische Gemisch erstarrt in der Folge zu einem wasserbeständigen, harten Baustoff, in dem Wasser sowohl chemisch als adsorptiv gebunden ist.

Auf diese Weise kann z.B. auch ein Gegenstand wie eine Gipskartonplatte oder ein Gegenstand mit vorgetäuschtem Steineffekt hergestellt werden.

Somit stellt eine erfindungsgemäße Zusammensetzung, die zu Wasser zugesetzt wird und die eine hydratisierte Baustoffzusammensetzung ergibt, die nach dem Aushärten wasserbeständig ist, eine bevorzugte Ausführungsform der Erfindung dar.

Ein weiterer Gegenstand der Erfindung ist eine hydratisierte Baustoffzusammensetzung, umfassend Wasser und das Gemisch der Komponenten (a), (b) und (c) oder Wasser und das Gemisch der Komponenten (a), (b), (c) und (d), vorzugsweise
(i) Wasser und
(ii)
   das Gemisch der Komponenten (a), (b) und (c) oder
   das Gemisch der Komponenten (a), (b), (c) und (d)
im Masseverhältnis (i) zu (ii) von 0,2 :1 bis 1:1, insbesondere 0,35:1 bis 0,7:1. Dieser hydratisierte Baustoff kann ebenfalls ein oder mehrere Additive enthalten, die sich bei der Herstellung zementartiger Zusammensetzungen verwenden lassen. In einer bevorzugten Ausführungsform enthält der hydratisierte Baustoff mindestens einen Verflüssiger.

Additive können als Teil der trockenen Bindemittelzusammensetzung oder bauchemischen Zusammensetzung oder gesondert zugegeben werden. Geeignete, optional einsetzbare Additive werden weiter unten genannt.

Ein weiterer Gegenstand der vorliegenden Erfindung ist ein bauchemisches Produkt, vorzugsweise ausgewählt aus Fliesenkleber, Fugenmörtel, Putz, Mauermörtel, Estrichmörtel, Reparaturmörtel, Ankermörtel, selbstverlaufende Fußbodenausgleichsmasse, Klebe- und Armierungsmörtel für Wärmedämmverbundsysteme (external thermal insulation composite systems: "etics"), Wand- und Bodenspachtelmassen, Dichtschlämme, umfassend 15 bis 55 Gew.-%, vorzugsweise 15-40 Gew.-%, insbesondere 20-40 Gew.-% einer erfindungsgemäßen Bindemittelzusammensetzung.

Ein weiterer Gegenstand der Erfindung ist ein Verfahren zum Einsatz einer erfindungsgemäßen Zusammensetzung oder eines bauchemischen Produktes wie zuvor beschrieben als Bindemasse zwischen mindestens zwei Gegenständen, umfassend das Auftragen und Erhärten lassen der mit Wasser angemachten Zusammensetzung oder des mit Wasser angemachten bauchemischen Produkts, unter Bildung einer wasserbeständigen Bindung zwischen den Gegenständen.

Ein weiterer Gegenstand der Erfindung ist ein Verfahren zum Einsatz einer erfindungsgemäßen Zusammensetzung oder eines bauchemischen Produktes wie zuvor beschrieben, umfassend das Auftragen und Erhärten lassen der mit Wasser angemachten Zusammensetzung oder des mit Wasser angemachten bauchemischen Produkts, zur Ausbildung einer wasserbeständigen Außenoberfläche.

Geeignete bauchemische Produkte kommen insbesondere als feine Pulver in Betracht, welche dann vor Ort bzw. an der konkreten Baustelle mit Wasser angesetzt werden.

Erfindungsgemäße bauchemische Produkte enthalten neben dem vorgenannten erfindungsgemäßen Bindemittel mindestens einen Zuschlagsstoff, insbesondere ausgewählt aus Quarzsand, Kalksteinsand, Kalksteinmehl, Verdickungsmittel (z. B. auf Basis von Schichtsilicaten oder Stärkeethern), Wasserrückhaltemittel (z.B. Celluloseether), Dispersionspulver (z. B. EVA-Pulver), Erhärtungsbeschleuniger (z. B. Alkalicarbonate, Alkalisulfate, Cacliumsulfatdihydrat, Tonerdezemente), Verzögerer, Verflüssiger und Entschäumer. Bevorzugt enthalten die bauchemischen Produkte mindestens einen Zuschlagstoff ausgewählt aus Quarzsand, Verflüssiger und Gemischen davon.

Erfindungsgemäße bauchemische Produkte können auch Leichtzuschlagstoffe enthalten. Diese Leichtzuschlagstoffe weisen typischerweise Rohdichten von weniger als 2000 kg/ m³, bevorzugt weniger als 1500 kg/m³, ganz besonders bevorzugt weniger als 1200 kg/m³ oder gar weniger als 1000 kg/m³ auf. Hierfür geeignet sind z.B. Mikrohohlkugeln aus Glas, Keramik oder Kunststoff, Blähglas, Blähglimmer, Blähperlite, Blähschiefer, Blähton, Steinkohlenflugasche, Ziegelsplitt, Naturbims, Tuff, Lava Hüttensandbims und Kesselsand. Es können dabei auch zwei oder mehr dieser unterschiedlichen Leichtzuschlagstoffe miteinander kombiniert werden. Der Einsatz dieser Leichtzuschlagstoffe ist vorteilhaft, da hierdurch das spezifische Gewicht der Gesamtrezeptur gesenkt werden kann.

Erfindungsgemäße bauchemische Produkte, insbesondere in Form von pulverförmigen Zusammensetzungen, können beispielsweise die folgenden Bestandteile enthalten, wobei die nachfolgenden Mengenangaben jeweils auf die bauchemischen Produkte bezogen sind:
- erfindungsgemäßes Bindemittel: 15 bis 55 Gew.-%, vorzugsweise 15 bis 40 Gew.-%, bevorzugt 20 bis 40 Gew.- %;
- ggf. Füllstoffe, wie Quarzsand und/oder Kalksteinsand: 0 bis 85 Gew.- %, vorzugsweise 20 bis 85 Gew.-%, insbesondere 45 bis 85 Gew.- %, ganz besonders bevorzugt 65 bis 85 Gew.- %,
- ggf. feine Füllstoffe, wie Kalksteinmehl: 0 bis 75 Gew.- %, vorzugsweise 1 bis 65 Gew.-%, insbesondere 10 bis 60 Gew.- %,
- ggf. Verdickungsmittel, wie beispielsweise anorganische Verdicker (z.B. Kieselsäure, Schichtsilicate), organische Verdicker (z.B. Stärkeether), abgewandelte Naturstoffe (z.B. Pflanzenfasern), organische vollsynthetische Verdicker (z.B. Polyvinylalkohole, Polyacrylamide): 0 bis 3 Gew.- %, insbesondere 0,2 bis 1 Gew.-%,
- ggf. Wasserrückhaltemittel, wie beispielsweise Methylcellulose (z.B. Methylhydroxyethylcellulose, Methylhydroxypropylcellulose, Ethylhydroxyethylcellulose, Hydroxyethylcellulose): 0 bis 3 Gew.-%, insbesondere 0,1 bis 1 Gew.-%,
- ggf. Dispersionspulver: 0 bis 15 Gewichts-%, vorzugsweise 0,1 bis 10 Gew.-%, insbesondere 0,5 bis 6 Gew.- %,
- ggf. (Erhärtungs-)Beschleuniger, wie beispielsweise Kaliumsulfat, Aluminiumsulfat, Eisen (II) Sulfat, Natriumcarbonat, Calciumsulfatdihydrat, Calciumoxid: 0 bis 5 Gew.- %, insbesondere 0,1 bis 3 Gew.-%,
- ggf. Entschäumer: 0 bis 2 Gew.- %, insbesondere 0,1 bis 1 Gew.- %,
- ggf. Leichtzuschlagstoffe: 0 bis 50 Gew.-%, vorzugsweise 2 bis 45 Gew.- %, insbesondere 3 bis 40 Gew.- %,
- ggf. Tonerdezement: 0 bis 20 Gew.- %, vorzugsweise 0,1 bis 10 Gew.- %, insbesondere 1 bis 5 Gew.- %,
- ggf. Verzögerer, wie beispielsweise Zitronensäure, Weinsäure, Natriumgluconat: 0 bis 3 Gew.- %, insbesondere 0,01 bis 0,5 Gew.- %,
- ggf. Fasern, die beispielsweise aus Naturcellulose, Glas und/oder thermoplastischen Materialien bestehen: 0 bis 7 Gew.- %, vorzugsweise 0,1 bis 5 Gew.-%,
- ggf. Farbstoffe, beispielsweise Pigmente, wie Eisenoxide; z.B. 0,001 bis 5 Gew.-%,
- ggf. andere anorganische teilchenförmige Materialien mit Puzzolan-Eigenschaften, wie beispielsweise feine kieselsäurehaltige Materialien, Flugasche, Hochofenschlacke, Diatomeenerde: 0 bis 30 Gew.-%, vorzugsweise 2 bis 20 Gew.-%, insbesondere 5 bis 15 Gew.-%,
- ggf. verlaufsfördernde Mittel (Verflüssiger), beispielsweise Polymerisate auf Carboxylatbasis, Polyacrylsäuren und ihre Salze, Lignosulphonatsalze und sulfonierte Melamin- oder Naphtalinformaldehyde: 0 bis 2 Gew.-% , insbesondere 0,01 bis 1 Gew.-%,
- ggf. Paraffinöle, Weißöl: 0 bis 5Gew.-%, vorzugsweise 0,01 bis 2 Gew. %.

Ein bevorzugter Fliesenkleber umfasst:
- beta-CaSO₄·0.5 H₂O: 20 bis 45 Gew.-%,
- Portlandzement CEM I: 2 bis 10 Gew.-%,
- Klinoptilolit: 2 bis 25 Gew.-%,
- Quarzsand: 40 bis 70 Gew.-%,
- Wasserrückhaltemittel: 0,1 bis 0,8 Gew.-%,
- redispergierbares Polymerpulver (insbesondere Vinylacetat-Ethylen-Mischpolymerisat -basiert): 0,1 bis 3 Gew.-%,
- Verzögerer: 0,01 bis 0,5 Gew.-%.

Ein bevorzugter Fugenmörtel umfasst:
- beta-CaSO₄·0.5 H₂O: 15 bis 40 Gew.-%,
- Portlandzement CEM I: 2 bis 10 Gew.-%,
- Klinoptilolit: 2 bis 25 Gew.-%,
- Quarzsand: 40 bis 70 Gew.-%,
- Kalksteinmehl: 0 bis 20 Gew.-%,
- Wasserrückhaltemittel: 0,01 bis 1 Gew.-%,
- redispergierbares Polymerpulver (insbesondere Vinylacetat-Ethylen-Mischpolymerisat -basiert): 0,1 bis 3 Gew.-%,
- Verzögerer: 0,01 bis 1 Gew.-%.

Ein bevorzugter Putz- und Mauermörtel umfasst:
- beta-CaSO₄·0.5 H₂O: 10 bis 30 Gew.-%,
- Portlandzement CEM I: 2 bis 10 Gew.-%,
- Klinoptilolit: 2 bis 18 Gew.-%,
- Quarzsand: 50 bis 85 Gew.-%,
- Wasserrückhaltemittel: 0,01 bis 0,5 Gew.-%,
- Verzögerer: 0,01 bis 0,5 Gew.-%.
Ein solcher Putz- und Mauermörtel ist für die Innen- und Außenanwendung geeignet, ist wasser- und witterungsbeständig und er erfüllt die Mindestanforderungen der EN 998-1 (Putzmörtel) und 998-2 (Mauermörtel).

Ein bevorzugter Klebe- und Armierungsmörtel für Wärmedämmverbundsysteme (ETICS) umfasst:
- beta-CaSO₄·0.5 H₂O: 15 bis 30 Gew.-%,
- Portlandzement CEM I: 2 bis 10 Gew.-%,
- Klinoptilolit: 2 bis 15 Gew.-%,
- Quarzsand: 40 bis 70 Gew.-%,
- Kalksteinmehl (d50 vorzugsweise 5 bis 15 µm): 2 bis 10 Gew.-%,
- Wasserrückhaltemittel: 0,1 bis 1 Gew.-%,
- Fasern: 0 bis 0,5 -Gew.-%,
- redispergierbares Polymerpulver (insbesondere Vinylacetat-Ethylen-Mischpolymerisat -basiert): 0,1 bis 3 Gew.-%,
- Hydrophobierungsmittel: 0 bis 1 Gew.-%,
- Verzögerer: 0 bis 0,8 Gew.-%.

Ein bevorzugter Estrichmörtel, insbesondere einsetzbar für Flächen mit Feuchtigkeitsbeaufschlagung (z.B. Badezimmer, Kellerräume), umfasst:
- beta-CaSO₄·0.5 H₂O: 10 bis 20 Gew.-%,
- Portlandzement CEM I: 2 bis 5 Gew.-%,
- Klinoptilolit : 1 bis 7 Gew.-%,
- Quarzsand: 10 bis 30 Gew.-%,
- Grober Quarzsand/Kies (Körnung vorzugsweise 0,2-4 mm): 45 bis 75 Gew.-%,
- Verflüssiger: 0 bis 0,3 Gew.-%,
- Verzögerer: 0 bis 0,4 Gew.-%.

Man kann alternativ auf Basis des Estrichmörtels auch ein Estrichbindemittel formulieren, das man unter Weglassen des groben Quarzsandes/Kieses erhält. In diesem Fall wird der Sand/Kies dann unmittelbar auf der Baustelle, beziehungsweise, bei Estrichen aus dem Fahrmischer, im Mischwerk zugegeben.

Eine bevorzugte selbstverlaufende Fußbodenausgleichsmasse umfasst:
- beta-CaSO₄·0.5 H₂O: 15 bis 40 Gew.-%,
- Portlandzement CEM I: 2 bis 10 Gew.-%,
- Klinoptilolit: 2 bis 10 Gew.-%,
- Kalksteinmehl: 10 bis 40 Gew.-%,
- Quarzsand : 30 bis 70 Gew.-%,
- redispergierbares Polymerpulver (insbesondere Vinylacetat-Ethylen-Mischpolymerisat -basiert): 0,1 bis 5 Gew.-%,
- Verflüssiger: 0,01 bis 2 Gew.-%,
- Wasserrückhaltemittel (insbesondere Hydroxyethylcellulose): 0,02 bis 0,5 Gew.-%,
- Verzögerer: 0 bis 1 Gew.-%.

Die erfindungsgemäßen bauchemischen Produkte Fliesenkleber, Fugenmörtel, Putz- und Mauermörtel, -Klebe- und Armierungsmörtel, Estrich, selbstverlaufende Fußbodenausgleichsmasse, erfüllen jeweils die genormten Mindestanforderungen an die jeweiligen Produkte, nämlich:
- Fliesenkleber: Klasse C1 gemäß EN 12004: 2007,
- Fugenmörtel : Klasse CG1 gemäß EN 13888: 2009,
- Mauermörtel: Festigkeitsklassen M1 bis M10 gemäß EN 998-2 : 2010,
- selbstverlaufende Fußbodenausgleichsmasse: Festigkeitsklassen ≥ C20 F5 gemäß EN 13813: 2002,
- Klebe- und Armierungsmörtel: erfüllt erforderliche Haftzugfestigkeiten zum Untergrund und Dämmstoff, auch nach Wasserlagerung gemäß ETAG 004, EN13499,
- Estrich: Festigkeitsklassen ≥ C20 F4 gemäß EN13813: 2002.

### Beispiele:

### A) Bindemittelzusammensetzungen

Durch Vermischen der in Tabelle 1 aufgeführten Bestandteile wurde die Vergleichszusammensetzungen VM1 und VM2 und die erfindungsgemäßen Zusammensetzungen BM1 bis BM6 hergestellt. Zusammensetzungen, die als Bindemittel ausschließlich beta-Calciumsulfat-Hemihydrat enthalten (VM1), wurden nicht im Fall von "Mörtelmassen" berücksichtigt, da die Prüfkörper keine Wasserfestigkeit zeigten, teilweise zerfielen und nicht gemessen werden konnten. Deshalb wurde als Vergleichszusammensetzung die Kombination von beta-Calciumsulfat-Hemihydrat und Portlandzement CEM I 52,5R (VM2) gewählt, um Messwerte zu erhalten.
In der zweiten aufgelisteten Messreihe "Fliesenkleber" wurde als Vergleichszusammensetzung VM 1 auch reines beta-Calciumsulfat-Hemihydrat als Bindemittel verwendet und geprüft.

**Tabelle 1:**

| **Beispiel** | **beta-CaSO₄·0.5 H₂O [Gew.-%]** | **CEM I 52,5 R [Gew.-%]** | **Zeolith [Gew.-%]** | **Metakaolin [Gew.-%]** |
|---|---|---|---|---|
| VM1 | 100 | 0 | 0 | 0 |
| VM2 | 80 | 20 | 0 | 0 |
| BM1 | 80 | 14,7 | 5,3 | 0 |
| BM2 | 76 | 14 | 10 | 0 |
| BM3 | 72,4 | 13,3 | 14,3 | 0 |
| BM4 | 80 | 14,7 | 2,65 | 2,65 |
| BM5 | 76 | 14 | 5 | 5 |
| BM6 | 72,4 | 13,3 | 7,15 | 7,15 |

| | | | | |
|---|---|---|---|---|
| CEM I 52,5 R: Portlandzement | | | | |

Die Bindemittelzusammensetzungen wurden zu Mörtelmassen (siehe B) unten) und Fliesenklebern (siehe C) unten) weiterverarbeitet und diese bezüglich wesentlicher Eigenschaften untersucht.

### B) Mörtelmassen

Die Vergleichszusammensetzung VM2 und die erfindungsgemäßen Zusammensetzungen BM1 bis BM6 wurden jeweils im Gewichtsverhältnis 1 : 2 mit Quarzsand H33 vermischt. Es resultierten die Vergleichsmörtelmasse VM2 und die erfindungsgemäßen Mörtelmassen BM1 bis BM6.

Diese wurden jeweils im Gewichtsverhältnis 4 : 1 mit Wasser angemacht (4 Teile Zusammensetzung auf 1 Teil Wasser) und aus den resultierenden verarbeitungsfertigen Mörtelmassen wie in der Norm EN 196-1 beschrieben prismenförmige Prüfkörper mit den Abmessungen 4 x 4 x 16 cm hergestellt. Die Prüfkörper wurden nach 24 h entschalt und bezüglich der Biegezugfestigkeit und Druckfestigkeit untersucht. Zur Bestimmung von Biegezugfestigkeit und Druckfestigkeit nach Wasserlagerung wurde gemäß EN 196-1 vorgegangen. Dazu wurden die Prismen direkt nach dem Entschalen unter Wasser gelagert und Biegezugfestigkeit und Druckfestigkeit jeweils nach 6 Tagen und 27 Tagen Lagerung in Wasser, d.h. nach einer Gesamtlagerzeit von 7 Tagen und 28 Tagen bestimmt. Zudem wurden Biegezugfestigkeit und Druckfestigkeit nach Trockenlagerung (7 Tage und 28 Tage Lagerung bei 23°C und 50 % relative Luftfeuchtigkeit (r.F.)) bestimmt, wobei die Messungen gemäß EN 196-1 durchgeführt wurden. Die Ergebnisse sind in Tabelle 2 zusammengefasst, wobei sämtliche Werte in N/mm² angegeben sind.

**Tabelle 2 Mörtelmassen:**

| **Beispiel** | **VM2** | **BM1** | **BM2** | **BM3** | **BM4** | **BM5** | **BM6** |
|---|---|---|---|---|---|---|---|
| Trockenlagerung | | | | | | | |
| BZF 7d | 4,0 | 4,7 | 4,8 | 4,3 | 5,1 | 5,3 | 4,2 |
| BZF 28d | 3,7 | 5,3 | 5,9 | 4,2 | 4,8 | 5,5 | 4,3 |
| DF 7d | 15 | 18 | 14 | 19 | 21 | 22 | 22 |
| DF 28d | 18 | 21 | 20 | 21 | 24 | 30 | 28 |

| Wasserlagerung | | | | | | | |
|---|---|---|---|---|---|---|---|
| BZF 7d | 1,7 | 2,3 | 2,5 | 2,9 | 2,0 | 3,5 | 3,4 |
| BZF28d | 1,8 | 2,3 | 2,8 | 3,0 | 2,3 | 2,8 | 3,1 |
| DF 7d | 8 | 11 | 15 | 13 | 14 | 19 | 22 |
| DF 28d | 9 | 15 | 18 | 18 | 17 | 20 | 22 |

| | | | | | | | |
|---|---|---|---|---|---|---|---|
| BZF: Biegezugfestigkeit DF: Druckfestigkeit | | | | | | | |

Es zeigt sich, dass Mörtelmassen auf Basis erfindungsgemäßer Bindemittelzusammensetzungen nach Trockenlagerung für 28 Tage (28d) deutlich höhere Biegezugfestigkeiten und Druckfestigkeiten aufweisen, als Mörtelmassen, deren Bindemittel rein auf beta-Calciumsulfat-Hemihydrat oder einem beta-Calciumsulfat-Hemihydrat/Portlandzement-Gemisch basieren. Nach Wasserlagerung ist dieser Effekt noch ausgeprägter und tritt bereits nach Lagerung für 7 Tage (7d) auf. Die erfindungsgemäßen Mörtelmassen zeichnen sich demnach durch eine erhöhte Langzeitstabilität sogar bei Lagerung unter Wasser aus.

### C) Fliesenkleber

Die Vergleichszusammensetzungen VM1 und VM2 und die erfindungsgemäßen Zusammensetzungen BM1 bis BM6 wurden zu Fliesenklebern weiterverarbeitet. Dazu wurden jeweils 46 Gew-% einer Bindemittelzusammensetzung mit 51,9 Gew.-% Quarzsand einer Körnung von 0,1-0,5 mm, 0,5 Gew.-% Methylcellulose, 1,5 Gew.-% eines redispergierbaren Polymerpulvers auf Vinylacetat/Ethylen-Basis und 0,1 Gew.-% Verzögerer (Ca-Salz einer N-Polyoxymethylen-Aminosäure) miteinander vermischt. Es resultierten die Vergleichsfliesenkleber VM1 und VM2 und die erfindungsgemäßen Fliesenkleber BM1 bis BM6.

Diese wurden jeweils im Gewichtsverhältnis 3 : 1 mit Wasser angemacht (3 Teile Zusammensetzung auf 1 Teil Wasser) und die resultierenden verarbeitungsfertigen Fliesenkleber bezüglich ihrer Haftzugwerte untersucht.

Die Haftzugfestigkeitswerte wurden gemäß Prüfverfahren EN 1348:2007, 8.2 nach Trockenlagerung (gemessen nach 7 Tagen und 28 Tagen), sowie gemäß Prüfverfahren EN 1348:2007, 8.3 nach Wasserlagerung (gemessen nach 7 Tagen und 28 Tagen, wobei die Lagerung zunächst 7 Tage bei 23°C und 50 % r.F. und anschließend für 7 bzw. 21 Tage unter Wasser erfolgte) bestimmt.

Die Ergebnisse sind in Tabelle 3 zusammengefasst, wobei sämtliche Werte in N/mm² angegeben sind.

**Tabelle 3 Fliesenkleber:**

| **Beispiel** | **VM1** | **VM2** | **BM1** | **BM2** | **BM3** | **BM4** | **BM5** | **BM6** |
|---|---|---|---|---|---|---|---|---|
| **Trockenlagerung** | | | | | | | | |
| Haftzugfestigkeit 7d | 1,4 | 1,6 | 1,4 | 1,4 | 1,2 | 1,6 | 1,4 | 1,4 |
| Haftzugfestigkeit 28d | 1,4 | 1,9 | 1,4 | 1,4 | 1,4 | 1,8 | 1,5 | 1,6 |

| **Wasserlagerung** | | | | | | | | |
|---|---|---|---|---|---|---|---|---|
| Haftzugfestigkeit 14d | 0,0 | 0,4 | 0,5 | 0,7 | 0,9 | 0,7 | 0,8 | 0,7 |
| Haftzugfestigkeit 28d | 0,0 | 0,3 | 0,5 | 0,7 | 0,8 | 0,8 | 0,9 | 0,8 |

Es zeigt sich, dass sich auf Basis der erfindungsgemäßen Bindemittelzusammensetzungen Fliesenkleber formulieren lassen, die Fliesenklebern auf Basis eines beta-Calciumsulfat-Hemihydrat/Portlandzement-Gemischs ohne Zugabe von Zeolith hinsichtlich der Stabilität unter Feuchtigkeitsbeanspruchung deutlich überlegen sind.

## Patentansprüche

1. Bindemittelzusammensetzung,
umfassend
(a) beta-Calciumsulfat-Hemihydrat (β-CaSO₄·0.5 H₂O),
(b) Portlandzement und
(c) Zeolith,
wobei das beta-Calciumsulfat-Hemihydrat in einer Menge von ≥ 65 Gew.-Teilen und der Zeolith in einer Gesamtmenge von 1 bis 25 Gew.-Teilen enthalten ist, jeweils bezogen auf eine Gesamtmenge von 100 Gew.-Teilen, die gebildet ist von den drei Komponenten (a) beta-Calciumsulfat-Hemihydrat (β-CaSO4 0.5 H2O), (b) Portlandzement, (c) Zeolith.

2. Zusammensetzung nach Anspruch 1, **dadurch gekennzeichnet, dass** das beta-Calciumsulfat-Hemihydrat in einer Menge von 65 bis 90 Gew.-Teilen, insbesondere in einer Menge von 70 bis 80 Gew.- Teilen enthalten ist, bezogen auf eine Gesamtmenge von 100 Gew.- Teilen, die gebildet ist von den drei Komponenten (a) beta-Calciumsulfat-Hemihydrat (β-CaSO₄·0.5 H₂O),(b) Portlandzement, (c) Zeolith.

3. Zusammensetzung nach mindestens einem der Ansprüche 1 bis 2, **dadurch gekennzeichnet, dass** der Portlandzement in einer Gesamtmenge von 1 bis 30 Gew.-Teilen, vorzugsweise 5 bis 20 Gew.- Teilen, insbesondere 8 bis 20 Gew.- Teilen enthalten ist, bezogen auf eine Gesamtmenge von 100 Gew.- Teilen, gebildet von den drei Komponenten (a) beta-Calciumsulfat-Hemihydrat (β-CaSO4·0.5 H₂O),(b) Portlandzement, (c) Zeolith.

4. Zusammensetzung nach mindestens einem der Ansprüche 1 bis 3, **dadurch gekennzeichnet, dass** der Zeolith in einer Gesamtmenge von 3 bis 20 Gew.- Teilen, insbesondere 5 bis 15 Gew.- Teilen enthalten ist, bezogen auf eine Gesamtmenge von 100 Gew.- Teilen, gebildet von den drei Komponenten (a) beta-Calciumsulfat-Hemihydrat (β-CaSO4·0.5 H2O), (b) Portlandzement, (c) Zeolith.

5. Zusammensetzung nach mindestens einem der Ansprüche 1 bis 4, **dadurch gekennzeichnet, dass** als Zeolith natürlicher Zeolith enthalten ist, vorzugsweise ausgewählt aus Blätterzeolithen, vorteilhafterweise Zeolithen der Heulandit-Gruppe, insbesondere Klinoptilolith, wobei die mittlere Teilchengröße d50 des Zeoliths vorzugsweise unter 100 µm, vorteilhafterweise unter 50 µm und insbesondere über 0,5 µm und unter 15 µm liegt.

6. Zusammensetzung nach mindestens einem der Ansprüche 1 bis 5, **dadurch gekennzeichnet, dass** weiterhin Metakaolin enthalten ist, vorzugsweise in einer Menge von 1 bis 25 Gew.-Teilen, bezogen auf eine Gesamtmenge von 100 Gew.-Teilen, gebildet von den vier Komponenten (a) beta-Calciumsulfat-Hemihydrat (β-CaSO₄·0.5 H₂O),(b) Portlandzement, (c) Zeolith, (d) Metakaolin.

7. Zusammensetzung nach mindestens einem der Ansprüche 1 bis 6, **dadurch gekennzeichnet, dass** das beta-Calciumsulfat-Hemihydrat in pulverförmiger Form eingesetzt wird, wobei die mittlere Teilchengröße d50 vorzugsweise unter 50 µm, vorteilhafterweise unter 30 µm, in weiter vorteilhafter Weise über 1 µm und unter 20 µm, noch bevorzugter im Bereich von 2 µm bis 15 µm liegt.

8. Zusammensetzung nach mindestens einem der Ansprüche 1 bis 7, **dadurch gekennzeichnet, dass** sie zu Wasser zugesetzt wird und eine hydratisierte Baustoffzusammensetzung ergibt, die nach dem Aushärten wasserbeständig ist.

9. Bauchemisches Produkt, umfassend 15 bis 55 Gew.-%, vorzugsweise 15-40 Gew.-%, insbesondere 20-40 Gew.-% einer Bindemittelzusammensetzung nach mindestens einem der Ansprüche 1 bis 7, wobei das bauchemische Produkt vorzugsweise ausgewählt ist aus Fliesenkleber, Fugenmörtel, Putzmörtel, Mauermörtel, Estrichmörtel, Reparaturmörtel, Ankermörtel, Klebe- und Armierungsmörtel für Wärmedämmverbundsysteme (external thermal insulation composite systems: "etics"), selbstverlaufende Fußbodenausgleichsmasse, Wand- und Bodenspachtelmassen, und Dichtschlämme.

10. Zusammensetzung nach mindestens einem der Ansprüche 1 bis 8 oder bauchemisches Produkt nach Anspruch 9, **dadurch gekennzeichnet, dass** die Zusammensetzung und das bauchemische Produkt weiterhin mindestens einen Verflüssiger enthält.

## Claims

1. A binder composition comprising
(a) beta-calcium sulfate hemihydrate (β-CaSO₄·0.5 H₂O),
(b) Portland cement, and
(c) zeolite,
wherein the beta-calcium sulfate hemihydrate is contained in an amount of ≥ 65 parts by weight and the zeolite is contained in a total amount of from 1 to 25 parts by weight, based on a total amount of 100 parts by weight in each case, which total amount is formed of the three components (a) beta-calcium sulfate hemihydrate (β-CaSO₄ 0.5H₂O), (b) Portland cement, (c) zeolite.

2. The composition according to claim 1, **characterized in that** the beta-calcium sulfate hemihydrate is contained in an amount of from 65 to 90 parts by weight, in particular in an amount of from 70 to 80 parts by weight, based on a total amount of 100 parts by weight, which total amount is formed of the three components (a) beta-calcium sulfate hemihydrate (β-CaSO₄·0.5 H₂O), (b) Portland cement, (c) zeolite.

3. The composition according to at least one of claims 1 to 2, **characterized in that** the Portland cement is contained in a total amount of from 1 to 30 parts by weight, preferably from 5 to 20 parts by weight, in particular from 8 to 20 parts by weight, based on a total amount of 100 parts by weight, formed of the three components (a) beta-calcium sulfate hemihydrate (β-CaSO₄·0.5 H₂O), (b) Portland cement, (c) zeolite.

4. The composition according to at least one of claims 1 to 3, **characterized in that** the zeolite is contained in a total amount of from 3 to 20 parts by weight, in particular from 5 to 15 parts by weight, based on a total amount of 100 parts by weight, formed of the three components (a) beta-calcium sulfate hemihydrate (β-CaSO₄·0.5 H₂O), (b) Portland cement, (c) zeolite.

5. The composition according to at least one of claims 1 to 4, **characterized in that** natural zeolite is contained as zeolite, preferably selected from foliated zeolites, advantageously zeolites of the heulandite group, in particular clinoptilolite, the average particle size d50 of the zeolite preferably being less than 100 µm, advantageously less than 50 µm, and in particular greater than 0.5 µm and less than 15 µm.

6. The composition according to at least one of claims 1 to 5, **characterized in that** the metakaolin is additionally contained, preferably in an amount of from 1 to 25 parts by weight, based on a total amount of 100 parts by weight, formed of the four components (a) beta-calcium sulfate hemihydrate (β-CaSO₄·0.5 H₂O),(b) Portland cement, (c) zeolite, (d) metakaolin.

7. The composition according to at least one of claims 1 to 6, **characterized in that** the beta-calcium sulfate hemihydrate is used in powder form, the average particle size d50 preferably being less than 50 µm, advantageously less than 30 µm, more advantageously greater than 1 µm and less than 20 µm, more preferably in the range of from 2 µm to 15 µm.

8. The composition according to at least one of claims 1 to 7, **characterized in that** it is added to water and produces a hydrated building material composition which is water-resistant after setting.

9. A construction chemical product having 15 to 55 wt.%, preferably 15-40 wt.%, in particular 20-40 wt.% of a binder composition according to at least one of claims 1 to 7, wherein the construction chemical product is preferably selected from tile adhesives, jointing mortars, plaster mortars, masonry mortars, screed mortars, repair mortars, anchor mortars, adhesive and reinforcing mortars for external thermal insulation composite systems ("etics"), self-leveling floor-leveling compounds, wall and ground fillers, and sealing slurries.

10. The composition according to at least one of claims 1 to 8 or the construction chemical product according to claim 9, **characterized in that** the composition and the construction chemical product additionally contain at least one plasticizer.

## Revendications

1. Composition de liant comprenant
(a) de l'hémihydrate de sulfate de calcium bêta (β-CaSO₄·0.5 H₂O),
(b) du ciment Portland et
(c) de la zéolithe,
l'hémihydrate de sulfate de calcium bêta étant contenu dans une quantité supérieure ou égale à 65 parties en poids et la zéolithe dans une quantité totale de 1 à 25 parties en poids, à chaque fois par rapport à une quantité totale de 100 parties en poids, qui est constituée des trois composants (a) hémihydrate de sulfate de calcium bêta (β-CaSO₄ 0,5 H₂O), (b) ciment Portland, (c) zéolithe.

2. Composition selon la revendication 1, **caractérisée en ce que** l'hémihydrate de sulfate de calcium bêta est contenu dans une quantité de 65 à 90 parties en poids, en particulier dans une quantité de 70 à 80 parties en poids, par rapport à une quantité totale de 100 parties en poids, qui est constituée des trois composants (a) hémihydrate de sulfate de bêta-calcium (β-CaSO₄·0.5 H₂O), (b) ciment Portland, (c) zéolithe.

3. Composition selon l'une au moins des revendications 1 à 2, **caractérisée en ce que** le ciment Portland est contenu dans une quantité totale de 1 à 30 parties en poids, de préférence de 5 à 20 parties en poids, en particulier de 8 à 20 parties en poids, par rapport à une quantité totale de 100 parties en poids, constituée des trois composants (a) hémihydrate de sulfate de calcium bêta (β-CaSO₄·0.5 H₂O), (b) ciment de Portland, (c) zéolithe.

4. Composition selon l'une au moins des revendications 1 à 3, **caractérisée en ce que** la zéolithe est contenue dans une quantité totale de 3 à 20 parties en poids, en particulier de 5 à 15 parties en poids, par rapport à une quantité totale de 100 parties en poids, constituée des trois composants (a) hémihydrate de sulfate de calcium bêta (β-CaSO₄·0.5 H₂O), (b) ciment de Portland, (c) zéolithe.

5. Composition selon l'une au moins des revendications 1 à 4, **caractérisée en ce que** la zéolithe est une zéolithe naturelle, de préférence choisie parmi les zéolithes feuilletées, de manière plus avantageuse les zéolithes du groupe des Heulandites, en particulier la clinoptilolite, la granulométrie moyenne d50 de la zéolithe étant de préférence inférieure à 100 µm, de manière plus avantageuse inférieure à 50 µm et en particulier supérieure à 0,5 µm et inférieure à 15 µm.

6. Composition selon l'une au moins des revendications 1 à 5, **caractérisée en ce que** du métakaolin est en outre contenu, de préférence dans une quantité de 1 à 25 parties en poids, par rapport à une quantité totale de 100 parties en poids, constituée des quatre composants (a) hémihydrate de sulfate de calcium bêta (β-CaSO₄·0.5 H₂O), (b) ciment Portland, (c) zéolithe, (d) métakaolin.

7. Composition selon l'une au moins des revendications 1 à 6, **caractérisée en ce que** l'hémihydrate de sulfate de calcium bêta est utilisé sous forme de poudre, la granulométrie moyenne d50 étant de préférence inférieure à 50 µm, de manière plus avantageuse inférieure à 30 µm, de manière encore plus avantageuse supérieure à 1 µm et inférieure à 20 µm, de manière encore plus préférée dans la gamme de 2 µm à 15 µm.

8. Composition selon au moins l'une des revendications 1 à 7, **caractérisée en ce qu'**elle est ajoutée à de l'eau et donne une composition de matériau de construction hydratée résistante à l'eau après le durcissement.

9. Produit chimique de construction comprenant de 15 à 55 % en poids, de préférence de 15 à 40 % en poids, en particulier de 20 à 40 % en poids, d'une composition de liant selon l'une au moins des revendications 1 à 7, le produit chimique de construction étant de préférence choisi parmi une colle pour carrelage, un mortier de jointoiement, un mortier d'enduit, un mortier de maçonnerie, un mortier de chape, un mortier de réparation, un mortier d'ancrage, un mortier adhésif et de renforcement pour systèmes composites d'isolation thermique (external thermal insulation composite systems: "etics"), une matière de compensation de plancher auto-nivelante, un produit de ragréage de mur et de sol, et des boues de jointoiement.

10. Composition selon l'une au moins des revendications 1 à 8 ou produit chimique de construction selon la revendication 9, **caractérisé en ce que** la composition et le produit chimique de construction contiennent en outre au moins un condenseur.
